# EUROPÄISCHE PATENTSCHRIFT

(11) **EP 2 020 543 B1**
(45) Veröffentlichungstag und Bekanntmachung des Hinweises auf die Patenterteilung: **14.07.2010**
(21) Anmeldenummer: 07113756.6
(22) Anmeldetag: 03.08.2007
(51) Int. Cl.: F16K 1/08, F16K 31/50, F16D 7/04

(54) **Ventilanordnung mit Drehmomentbegrenzer**
Valve assembly with torque limiter
Agencement de vannes avec limiteur de couple

(43) Veröffentlichungstag der Anmeldung: 04.02.2009
(73) Patentinhaber: Georg Fischer Wavin AG, 8201 Schaffhausen (CH)
(72) Erfinder: Helmbold, Thomas, 78224 Singen (DE); Topcuogullari, Ozan Ufuk, 79771 Klettgau (DE); Trefz, Oliver, 79848 Bonndorf (DE); Wermelinger, Jörg, 8200 Schaffhausen (CH); Haug, Peter, 78224 Singen (DE)
(74) Vertreter: Weiss, Wolfgang

(56) Entgegenhaltungen:
- DE-A1- 4 344 151
- DE-C1- 4 202 364
- US-A- 5 000 721
- US-A1- 2005 104 021

## Beschreibung

Die Erfindung bezieht sich auf eine Ventilanordnung umfassend ein Ventilgehäuse mit einem Ventilsitz, eine im Ventilgehäuse angeordnete Spindel, wobei die Spindel senkrecht zur Strömungsrichtung angeordnet ist, und ein mit der Spindel beweglich verbindbares Absperrglied mit einem Dichtkörper.

Im Rohrleitungsbau werden verschiedene Ventilbauarten verwendet um unter Druck stehenden, mediumsführenden Rohrleitungen abzusperren. Bei der Wahl der Ventilbauart spielen verschiedene Faktoren eine wichtige Rolle. Die Dichtwirkung zwischen Ventilsitz und Dichtkörper, der Widerstandsbeiwert des Ventils, die Abmessungen und die Herstellkosten des Ventils.

Aus der DE 196 46 275 A1 ist ein Ventil bekannt, bei dem die Ventilspindel senkrecht zur Strömungsrichtung verlaufend angeordnet ist. Das Absperrglied und der Dichtkörper sind unter zwei unterschiedlichen Winkeln zur Strömungsrichtung angeordnet. Der eigentliche Dichtkörper, ein O-Ring, ist an seiner äusseren Umfangsfläche im Ventilgehäuse integriert. Die Achsen der Zufluss- und Abflussleitungen sind versetzt zueinander angeordnet, was zu einem höheren Widerstandsbeiwert führt. Mehr als die Hälfte der Ringumfangsfläche liegt frei und ist bei geöffnetem Ventil dem strömenden Medium ausgesetzt. Die Dichtwirkung des O-Ringes ist nicht gleichmässig am gesamten Umfang verteilt. Der O-Ring wird in einem oberen Bereich vor allem in Richtung der O-Ring-Achse belastet und verformt. In einem unteren Bereich wird der O-Ring vor allem in radialer Richtung belastet und verformt.

Aus der DE 4344151 A1 ist weiterhin eine Überlastsicherung für ein Betätigungsglied eines Ventils bekannt. Die Drehmitnahme zwischen Ventilspindel und Betätigungsstange erfolgt durch radial federnd angeordnete Zahnelemente. Zur Erhöhung des Drehmoments werden auf zwei unterschiedlichen Durchmessern unterschiedliche Zahnelemente vorgesehen. Auf einem inneren kleineren Durchmesser ist eine Riefenverzahnung ausgebildet und auf einem äusseren grösseren Durchmesser sind weitere an Speichen angeordnete Zahnelemente ausgebildet. Eine axiale Relativbewegung zwischen Ventilspindel und Betätigungsstange wird durch Rastzungen ausgeschlossen.

Ausgehend von diesem Stand der Technik ist es Aufgabe der Erfindung, eine Ventilanordnung anzugeben, die einfach und kompakt aus möglichst wenigen Einzelteilen herzustellen ist und eine möglichst gute Dichtwirkung gewährleistet.

Diese Aufgabe wird gelöst durch eine Ventilanordnung umfassend ein Ventilgehäuse mit einem Ventilsitz, eine im Ventilgehäuse angeordnete Spindel, wobei die Spindel senkrecht zur Strömungsrichtung angeordnet ist, und ein mit der Spindel beweglich verbindbares Absperrglied mit einem Dichtkörper, wobei die Spindel eine Vorrichtung zur Begrenzung des Drehmomentes aufweist, gemäß den weiteren Merkmalen des Anspruchs 1.

Bevorzugte Weiterbildungen der Erfindung ergeben sich aus den abhängigen Ansprüchen.

Es ist von Vorteil, dass die Ventilanordnung korrosionsfest ist und über sehr langer Zeit sicher funktioniert. Dies wird dadurch erreicht, dass die Vorrichtung zur Begrenzung des Drehmomentes aus einem ersten mit der Spindel wirkverbundenen Korbbereich und einem zweiten mit einer Betätigungsvorrichtung wirkverbundenen Tellerbereich ausgebildet ist. Der Korbbereich und der Tellerbereich sind vollständig aus Kunststoff ausgebildet. Metallfedern oder andere Einzelteile, die den Zusammenbau der Ventilanordnung kompliziert machen oder korrodieren werden nicht verwendet.

Es ist auch von Vorteil, dass der Widerstandsbeiwert des Ventils möglichst klein gehalten wird und so der Druckverlust in der Rohrleitung möglichst klein gehalten wird. Dies wird dadurch erreicht, dass der erste untere Gehäusebereich einen T-förmigen Querschnitt aufweist, wobei die Achsen der Zufluss- und Abflussleitungen in einer Linie angeordnet sind.

Es ist auch von Vorteil, dass die Dichtwirkung möglichst gleichmässig auf dem gesamten Dichtkörper verteilt wird. Dies wird dadurch erreicht, dass am Absperrglied ein schräg zur Strömungsrichtung und übereinstimmend mit der Schräge des Ventilsitzes ausgebildeten Dichtkörper angeordnet ist.

Ein Ausführungsbeispiel der Erfindung wird anhand der Figuren beschrieben. Es zeigen:
Figur 1 einen Schnitt durch eine erfindungsgemässe Ventilanordnung im vollständig geöffneten Zustand,
Figur 2 einen Schnitt durch die Ventilanordnung von Figur 1 im vollständig geschlossenen Zustand,
Figur 3 einen Schnitt durch eine Vorrichtung zur Begrenzung des Drehmomentes im Ventil aus Figur 1,
Figur 4 eine perspektivische Sicht auf die Vorrichtung zur Begrenzung des Drehmomentes im Ventil aus Figur 1,
Figur 5 einen Schnitt durch die Vorrichtung zur Begrenzung des Drehmomentes im Ventil aus Figur 1 im vollständig geöffneten Zustand,
Figur 6 einen Schnitt durch die Vorrichtung zur Begrenzung des Drehmomentes im Ventil aus Figur 1 im vollständig geschlossenen Zustand,
Figur 7 einen Schnitt durch ein weiteres Ventil mit einer Vorrichtung zur Begrenzung des Drehmomentes im vollständig geschlossenen Zustand und
Figur 8 einen Schnitt durch das Ventil von Figur 7 mit einer Vorrichtung zur Begrenzung des Drehmomentes im vollständig geschlossenen Zustand.

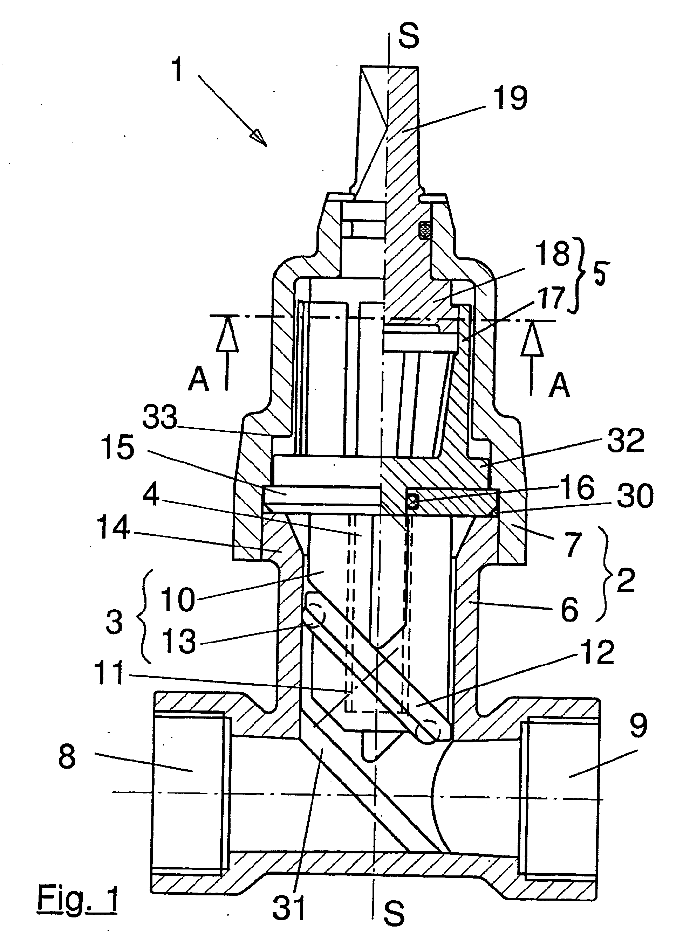

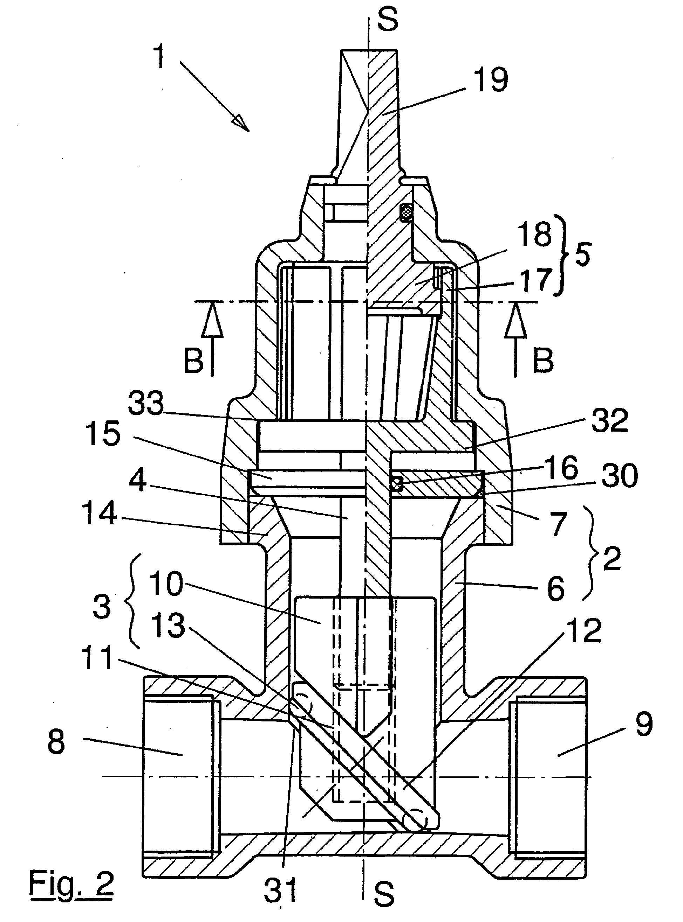

In Figur 1 und in Figur 2 ist eine Ventilanordnung 1 mit einem Ventilgehäuse 2, einem Absperrglied 3, einer Spindel 4 zur Betätigung eines Absperrgliedes 3 und einer Vorrichtung 5 zur Begrenzung des bei der Betätigung der Spindel 4 auftretenden Drehmomentes geschnitten dargestellt. Das Ventilgehäuse 2 besteht aus einem ersten unteren Gehäusebereich 6 und einem zweiten oberen Gehäusebereich 7. Die Ventilanordnung 1 ist vollständig aus Kunststoffteilen, d. h. aus korrosionsbeständigen Teilen hergestellt. Als Ausführungsbeispiel der Ventilanordnung 1 wird hier ein Hubventil 1 gezeigt, erfindungsgemäss können auch alle andere Ventilbauarten, wobei eine Spindel 4 verwendet wird, mit einer Vorrichtung 5 zur Drehmomentbegrenzung ausgestattet werden.

Der erste Gehäusebereich 6 ist im Wesentlichen T-förmig ausgebildet und weist zwei Anschlussbereiche 8,9 zum Anschliessen an die mediumsführende Zufluss- und Abflussrohrleitungen, die hier nicht dargestellt sind, auf. Die Achsen der Zufluss- und Abflussleitungen sind in einer Linie angeordnet. Hiermit wird erreicht, dass das Medium bei geöffnetem Ventil möglichst ohne Widerstand durch das Ventil 1 strömen kann. Das Absperrglied 3 ist im Wesentlichen einen zylindrischen Kolben 10 mit einem Innengewinde 11 das mit einem dazu passenden Gewinde an der Spindel 4 zusammenwirkt. Eine Drehung der Spindel 4 im Uhrzeigersinn bewirkt, dass der Kolben 10 im Ventilgehäuse 2 senkrecht nach unten bewegt und das Ventil geschlossen wird. Ebenso bewirkt eine Drehung im Gegenuhrzeigersinn das Anheben des Kolbens 10 und die Öffnung des Hubventils 1.

In einer Nut 12, der am Aussenumfang des Kolbens 10 schräg, d.h. unter einem Winkel zur Spindelachse S ausgebildet ist, ist ein handelsüblicher O-Ring als eigentlichen Dichtkörper 13 eingelegt. Die Nut 12 ist passend zum O-Ring 13 ausgebildet und umschliesst dabei den O-Ring 13 über einen grossen Teil des Umfanges, beispielsweise mehr als 270° bis über 300°, des O-Ringes 13. Hiermit wird erreicht, dass der O-Ring 13 beim Öffnen des Ventils auch bei hohen Strömungsgeschwindigkeiten nicht aus der Nut 12 gespült werden kann. Im unteren Gehäusebereich 6 ist zwischen den Anschlussbereichen 8,9 senkrecht unter der Spindel 4 ein Ventilsitz 31 ausgebildet, wobei der Ventilsitz 31 unter dem gleichen Winkel wie der O-Ring 13 zur Spindelachse S angeordnet ist.

Der zweite obere Gehäusebereich 7 ist an einer Schulter oder einem Flansch 14 des ersten unteren Gehäusebereichs 6 durch eine Schraubverbindung oder eine Schweissverbindung befestigt. Zwischen der Stirnseite des Flansches 14 und der Hals des oberen Gehäusebereiches 7 ist eine Zwischenplatte 15 ersichtlich. Die Zwischenplatte 15 dient einerseits beim Öffnen des Absperrgliedes 3 als Hubwegbegrenzung des Kolbens 10 und andererseits als Führung für die Spindel 4. Die Spindel 4 verläuft durch ein zentrales Loch der Zwischenplatte 15.

Zur Abdichtung ist in dem zentralen Loch eine weitere Nut 16 für eine O-Ringdichtung ersichtlich. Die Dichtung zwischen Spindel 4 und Zwischenplatte 15 ist am kleinst möglichen Durchmesser angeordnet um die Kräfte, die auf diese Dichtung wirken, möglichst klein zu halten. Mit einer zusätzlichen O-Ringdichtung in einer Aufnahme 30 zwischen dem unteren Gehäusebereich 6 und der Zwischenplatte 15 wird der vom Medium durchströmten unteren Gehäusebereich 6 gegenüber dem oberen Gehäusebereich 7 abgedichtet.

Das obere Ende der Spindel 4 ist als einem Korbbereich 17 ausgebildet. Im Korbbereich 17 greift ein Tellerbereich 18, der am unteren Ende einer Betätigungsstange 19 ausgebildet ist, ein. Der Tellerbereich 18 weist am Aussenumfang eine Verzahnung 20 und der Korbbereich 17 weist am Innenumfang eine weitere Gegenverzahnung 21 auf, die während dem normalen Betrieb des Hubventils 1 miteinander im Eingriff stehen. Die Drehmomentsicherung des Hubventils 1 wird erreicht durch die Zweiteilung der Ventilbetätigung: Die Betätigungsstange 19 mit am unteren Ende dem Tellerbereich 18 und die Spindel 4 mit am oberen Ende den Korbbereich 17.

In Figur 1 ist das Hubventil 1 im vollständig geöffneten Zustand und in Figur 2 ist das Hubventil 1 im vollständig geschlossenen Zustand dargestellt. Wenn das Hubventil 1 vollständig geöffnet wird, verschiebt sich der Korbbereich 17 gegenüber der Betätigungsstange 19 mit dem Tellerbereich 18 nach unten, bis die Spindel 4 mit dem Korbbereich auf die Zwischenplatte 15 aufliegt. Ebenso, wenn das Hubventil 1 vollständig geschlossen wird, wie in Figur 2 dargestellt, verschiebt sich der Korbbereich 17 gegenüber dem Tellerbereich 18 nach oben.

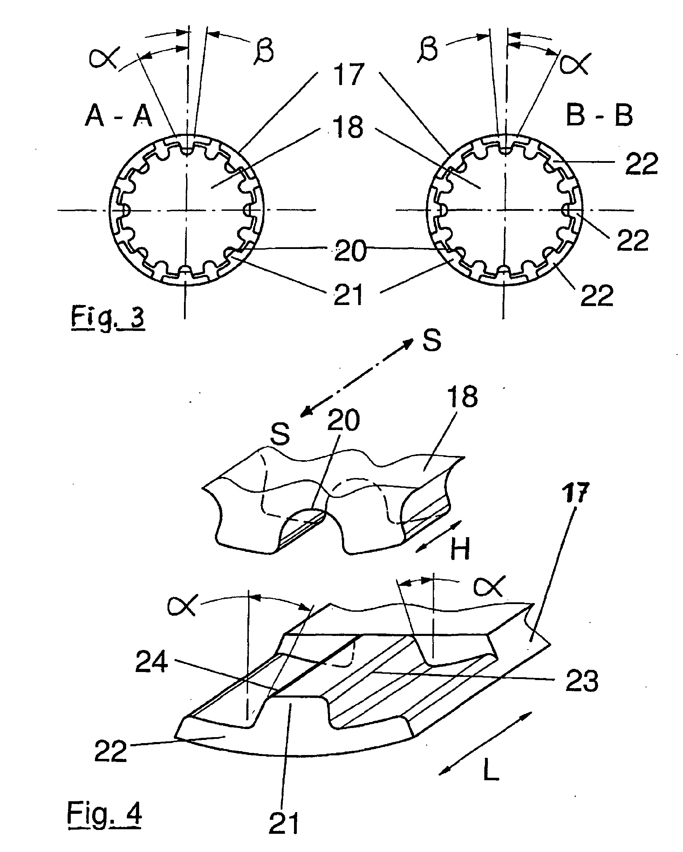

In Figur 3 und 4 ist ersichtlich, wie die Verzahnung 20,21 ausgebildet ist. Der Korbbereich 17 ist als einen Ring von mehreren, beispielsweise acht, radial federnden Wandbereichen 22 ausgebildet. An jedem Wandbereich 22 ist mindestens eine Verzahnung 21 ersichtlich, der in eine dazupassende Gegenverzahnung 20 am Umfang des Tellerbereiches 18 eingreift. Wenn das zulässige Drehmoment der Drehbewegung der Spindel 4 überschritten wird, federn die Wandbereiche 22 mit den Zähnen 21 radial nach aussen und leiten die Kraft, die auf die Betätigungsstange 19 und auf den Tellerbereich ausgeübt wird, nicht mehr weiter zum Korbbereich 17, zur Spindel 4 und zum Absperrglied 3.

In Figur 4 ist bei einem einzelnen Wandbereich 22 des Korbbereiches 17 mit einem Zahn 21 einen Ausschnitt aus dem Tellerbereich 18 mit einer Gegenverzahnung 20 vergrössert und perspektivisch, gesehen in Richtung der Spindelachse S, dargestellt. Die Länge L des Zahnes 21 ist grösser als die Höhe H des Tellerbereiches 18. Die Gegenverzahnung 20 kann sich somit in Richtung der Spindelachse S axial verschieben und bleibt dabei im Eingriff mit dem Zahn 21.

Der Zahn 21 weist zwei Zahnflanken 23, 24 mit unterschiedlichen Flankenwinkeln α, β auf. Ein Flankenwinkel α, der flacher ist als der Winkel der

Gegenverzahnung 20 hat zur Folge, dass die Kontaktfläche zwischen Zahn 21 und Gegenverzahnung 20 kleiner ist, und dass die Zähne 20,21 unter der Krafteinwirkung, die durch die Drehbewegung der Spindel 4 ausgeübt wird, übereinander wegrutschen können. Wenn der Flankenwinkel β des Zahnes 21 gleich gross ist wie der Flankenwinkel der Gegenverzahnung 20, ist die Kontaktfläche zwischen den Zähnen 20, 21 grösser und die Kraft, die übertragen wird, ebenfalls grösser. Dies bedeutet, dass, bei einer Drehbewegung in einer Richtung eine grössere Kraft übertragen werden kann als in der entgegengesetzten Richtung.

In Figur 4 ist auch ersichtlich, wie die Flankenwinkel α, β mit der Länge L des Zahnes 21 im Wandbereich 22 kontinuierlich ändern. Am Ende des Wandbereiches 22 weisen die Zahnflanken 23,24 jeweils die Flankenwinkel α, β auf den jeweils gegenüberliegenden Zahnflanken 23,24 auf. Durch den kontinuierlichen Übergang von einem grösseren Flankenwinkel α nach einem kleineren Flankenwinkel β auf der Seite der ersten Zahnflanke 23 und den gleichzeitigen Übergang der Flankenwinkel von β nach α auf der Seite der zweiten Zahnflanke 24 wird erreicht, dass an beiden Enden der Drehbewegung, d.h. in der ersten und in der zweiten Endstellung des Hubventils 1, eine Rutschkupplung, oder eine Begrenzung des Drehmomentes vorhanden ist. Der Flankenwinkel β ist wesentlich kleiner als der Flankenwinkel α, wobei der Flankenwinkel β auch 0° sein kann.

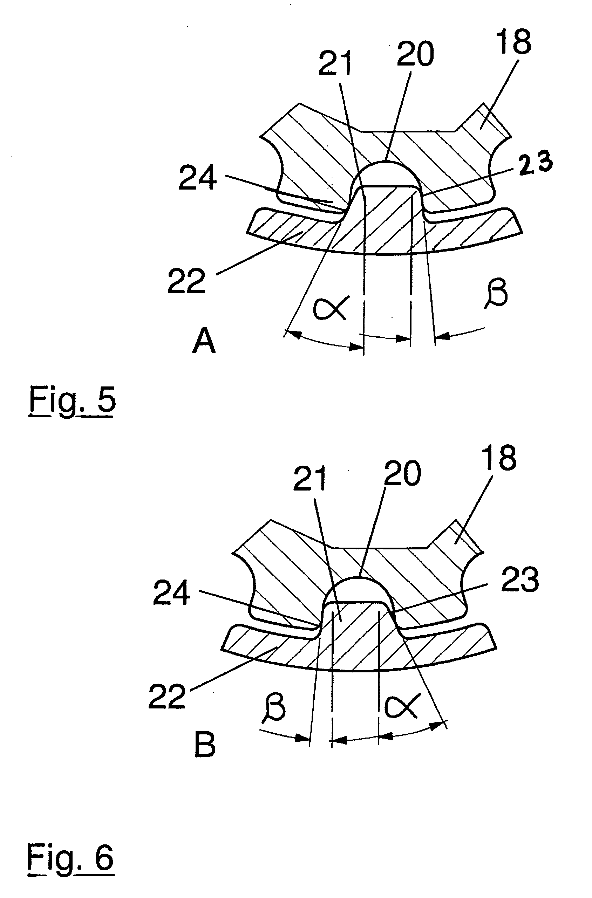

In Figuren 5 und 6 sind die Verzahnungen 20,21 geschnitten dargestellt. Figur 5 zeigt die Stellung des Tellerbereiches 18 und des Korbbereiches 17 in vollständig geöffnetem Zustand des Hubventils 1 und Figur 6 zeigt die die entsprechende Stellung im vollständig geschlossenen Zustand an. Der Schnitt aus Figur 5 ist in Figur 1 mit der Linie A-A, und der Schnitt aus Figur 6 ist in Figur 2 mit der Linie B-B angedeutet. Im vollständig geöffneten Zustand des Hubventils 1 (Fig. 1) liegt der Korbbereich 17 der Spindel 4 mit einer Bodenplatte 32 auf die Zwischenplatte 15 auf und befindet sich der Tellerbereich 18 am oberen Ende des Korbbereichs 17. Im vollständig geschlossenen Zustand des Hubventils 1 (Fig. 2) liegt die Bodenplatte 32 des Korbbereichs 17 der Spindel 4 auf eine Schulter 33 im oberen Gehäusebereich 7 an und befindet sich der Tellerbereich 18 am oberen Ende des Korbbereichs 17.

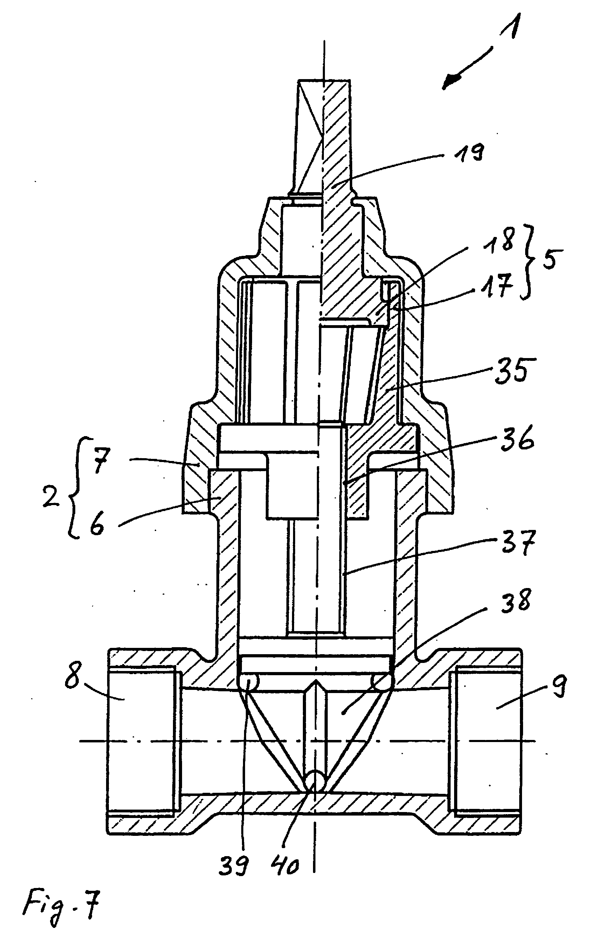

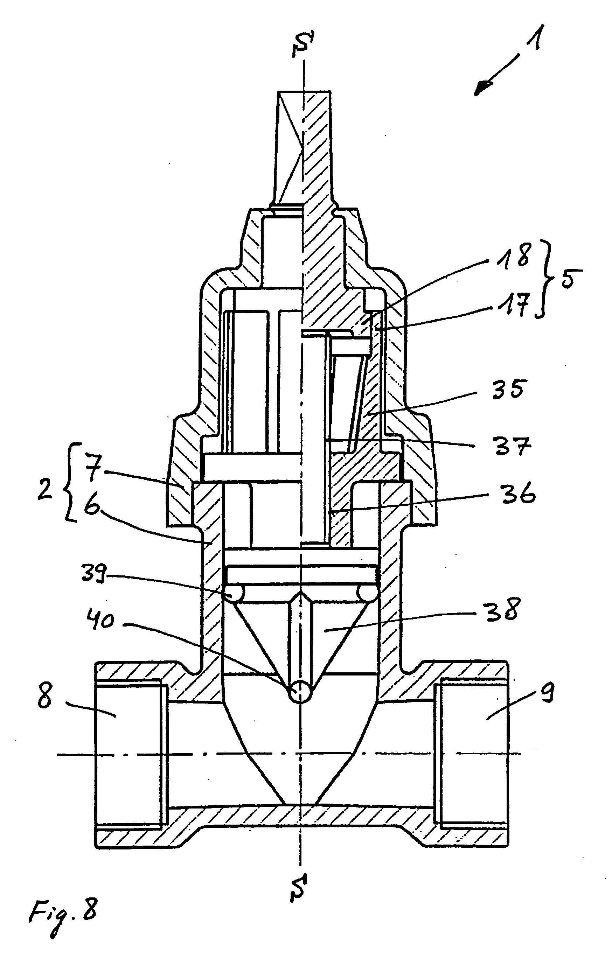

In den Figuren 7 und 8 ist ein weiteres Ausführungsbeispiel einer Ventilanordnung 1 mit einer Vorrichtung 5 zur Begrenzung des Drehmomentes dargestellt. Hier besteht die Vorrichtung 5 zur Begrenzung des Drehmomentes, wie in Figur 1 und 2, aus einem Tellerbereich 18, der am unteren Ende der Betätigungsstange 19 ausgebildet ist. Der Tellerbereich 18 weist eine Verzahnung 20 auf, die mit einer Gegenverzahnung 21 an einem radial nachgiebigen Korbbereich 17 am oberen Ende eines Zwischenstückes 35 ausgebildet ist. Das Zwischenstück 35 weist am unteren Ende einen Gewindebereich 36 auf, in dem eine Spindel 37 angeordnet ist.

Die Spindel 37 ist aus einem Stück mit dem Absperrglied 38 ausgebildet. Am Absperrglied 38 sind Dichtvorrichtungen 39,40 ausgebildet. Die Dichtvorrichtungen 39,40 können in die Form einer Kunststoffspritzgussanlage eingelegt werden und mit dem Kunststoff des Absperrgliedes 38 um- oder überspritzt werden. Die Dichtvorrichtungen 39, 40 werden beispielsweise aus einem thermoplastischen Elastomer hergestellt und mit der Polyethylenzusammensetzung des Absperrgliedes 38 überspritzt. Eine Zwischenplatte 15, wie in Figur 1 und 2 kann weggelassen werden. Die Bauhöhe der Ventilanordnung von Figuren 7 und 8 ist wesentlich geringer als die Bauhöhe der Ventilanordnung der Figuren 1 und 2. Hierdurch wird auch bei reduzierten Platzverhältnissen die Verwendung eines Ventils 1 mit Drehmomentbegrenzung 5 möglich. Die Ventilanordnung aus Figuren 7 und 8, die nur aus fünf Einzelteilen aufgebaut ist, ist wesentlich einfacher aus aufgebaut als die Ventilanordnung aus Figuren 1 und 2.

Mit der hier vorgeschlagenen Anordnung wird eine Drehmomentbegrenzung 5 angeboten, die sowohl im geschlossenen als im geöffneten Zustand die gleiche Sicherheit gegen Überlastung bietet. Sämtliche Teile sind aus Kunststoff hergestellt und es werden keine Kugeln benötigt, die schwer zu handhaben sind und nach längerer Zeit festsitzen. Auch eine Metallfeder, die nach längerer Zeit korrodiert und/oder die Federkraft verliert, wird nicht benötigt. Weil die Federwirkung im Kunststoffbauteil des Korbbereiches 17 integriert ist, kann eine sehr kompakte Bauweise mit möglichst wenigen Einzelteilen angeboten werden. Die Spindel 4 mit der Drehmomentbegrenzung 5 weist nur einen unwesentlich grösseren Durchmesser als das eigentliche Absperrglied 3 auf.

Das Hubventil 1 wird vor allem in unterirdisch verlegten Wasserleitungen eingesetzt. Dabei muss das Hubventil 1 nicht sehr oft betätigt werden. Auch nach längerer unbetätigter Zeit nimmt das Hubventil 1 noch die Kräfte auf, die für eine richtige Betätigung notwendig sind. Die hier dargestellte Drehmomentbegrenzung 5 bestehend aus Tellerbereich 18 und Korbbereich 17 kann auch bei anderen Ventilbauarten und bei anderen Aufgaben, bei denen eine Drehmomentbegrenzung erforderlich ist, angewendet werden.

## Patentansprüche

1. Ventilanordnung (1) umfassend ein Ventilgehäuse (2), eine im Ventilgehäuse (2) angeordnete Spindel (4), wobei die Spindel (4) senkrecht zur Strömungsrichtung angeordnet ist, und ein mit der Spindel (4) beweglich verbindbares Absperrglied (3), wobei die Spindel (4) eine Vorrichtung (5) zur Begrenzung des Drehmomentes aufweist, wobei die Vorrichtung (5) zur Begrenzung des Drehmomentes aus einem ersten mit der Spindel (4) wirkverbundenen Korbbereich (17) und einem zweiten mit einer Betätigungsvorrichtung (19) wirkverbundenen Tellerbereich (18) ausgebildet ist, wobei der Korbbereich (17) und der Tellerbereich (18) zu einander passende Verzahnungen bzw. Gegenverzahnungen (20,21) aufweisen, **dadurch gekennzeichnet, dass** die Verzahnung (21) des Korbbereiches (17) Zahnflanken (23,24) mit unterschiedlich ausgebildeten Flankenwinkeln (α, β) aufweisen, wobei sich der Flankenwinkel (α, β) bei der axialen Bewegung des Korbbereiches (17) relativ zum Tellerbereich (18) von (α, β) bis (β, α) kontinuierlich ändert.

2. Ventilanordnung (1) nach dem Anspruch 1, **dadurch gekennzeichnet, dass** das Ventilgehäuse (2) aus einem ersten unteren, dem Absperrglied (3) aufnehmenden und vom Medium durchströmten Gehäusebereich (6) und einem zweiten oberen, der Vorrichtung (5) zur Begrenzung des Drehmomentes aufnehmenden Gehäusebereich (7) ausgebildet ist.

3. Ventilanordnung (1) nach mindestens einem der Ansprüche 1 oder 2, **dadurch gekennzeichnet, dass** der erste untere Gehäusebereich (6) einen T-förmigen Querschnitt aufweist, wobei die Achsen der Zufluss- und Abflussleitungen in einer Linie angeordnet sind.

4. Ventilanordnung (1) nach mindestens einem der Ansprüche 1 bis 3, **dadurch gekennzeichnet, dass** am Absperrglied (3) ein schräg zur Strömungsrichtung und übereinstimmend mit der Schräge des Ventilsitzes (31) ausgebildeten Dichtkörper (13) angeordnet ist.

5. Ventilanordnung (1) nach mindestens einem der Ansprüche 1 bis 4, **dadurch gekennzeichnet, dass** der Korbbereich (17) in Bezug auf den Tellerbereich (18) um die Spindelachse (S) drehbar und in Richtung der Spindelachse (S) verschiebbar angeordnet ist.

6. Ventilanordnung (1) nach mindestens einem der Ansprüche 1 bis 5, **dadurch gekennzeichnet, dass** die Verzahnung (21) des Korbbereiches (17) radial federnd ausgebildet ist.

7. Ventilanordnung (1) nach mindestens einem der Ansprüche 1 bis 6, **dadurch gekennzeichnet, dass** die Verzahnung (21) des Korbbereiches (17) eine Länge (L) aufweist, die länger ist als die Höhe (H) der Verzahnung (20) des Tellerbereiches (18).

8. Ventilanordnung (1) nach mindestens einem der Ansprüche 1 bis 7, **dadurch gekennzeichnet, dass** der Korbbereich (17) und der Tellerbereich (18) aus Kunststoff ausgebildet sind.

9. Ventilanordnung (1) nach mindestens einem der Ansprüche 1 bis 8, **dadurch gekennzeichnet, dass** die Ventilanordnung als ein Hubventil (1) ausgebildet ist.

10. Ventilanordnung (1) nach mindestens einem der Ansprüche 1 bis 8, **dadurch gekennzeichnet, dass** die Ventilanordnung als ein Kugelhahn ausgebildet ist.

## Claims

1. Valve assembly (1) comprising a valve housing (2), a spindle (4) which is arranged in the valve housing (2), the spindle (4) being arranged perpendicularly with respect to the flow direction, and a shutoff element (3) which can be connected movably to the spindle (4), the spindle (4) having an apparatus (5) for limiting the torque, the apparatus (5) for limiting the torque being formed from a first cage region (17) which is operatively connected to the spindle (4) and from a second disk region (18) which is operatively connected to an actuating apparatus (19), the cage region (17) and the disk region (18) having toothing systems and mating toothing systems (20, 21) which are matched to one another, **characterized in that** the toothing system (21) of the cage region (17) has tooth flanks (23, 24) with flank angles (α, β) of different configuration, the flank angle (α, β) changing continuously from (α, β) to (β, α) during the axial movement of the cage region (17) relative to the disk region (18).

2. Valve assembly (1) according to Claim 1, **characterized in that** the valve housing (2) is formed from a first lower housing region (6) which accommodates the shutoff element (3) and through which the medium flows, and from a second upper housing region (7) which accommodates the apparatus (5) for limiting the torque.

3. Valve assembly (1) according to at least one of Claims 1 and 2, **characterized in that** the first lower housing region (6) has a T-shaped cross section, the axes of the inflow and outflow lines being arranged in one line.

4. Valve assembly (1) according to at least one of Claims 1 to 3, **characterized in that** a sealing element (13) which is formed obliquely with respect to the flow direction and so as to correspond to the inclined slope of the valve seat (31) is arranged on the shutoff element (3).

5. Valve assembly (1) according to at least one of Claims 1 to 4, **characterized in that** the cage region (17) is arranged such that it can be rotated about the spindle axis (S) in relation to the disk region (18) and such that it can be displaced in the direction of the spindle axis (S).

6. Valve assembly (1) according to at least one of Claims 1 to 5, **characterized in that** the toothing system (21) of the cage region (17) is of radially resilient configuration.

7. Valve assembly (1) according to at least one of Claims 1 to 6, **characterized in that** the toothing system (21) of the cage region (17) has a length (L) which is longer than the height (H) of the toothing system (20) of the disk region (18).

8. Valve assembly (1) according to at least one of Claims 1 to 7, **characterized in that** the cage region (17) and the disk region (18) are formed from plastic.

9. Valve assembly (1) according to at least one of Claims 1 to 8, **characterized in that** the valve assembly is configured as a lifting valve (1).

10. Valve assembly (1) according to at least one of Claims 1 to 8, **characterized in that** the valve assembly is configured as a ball cock.

## Revendications

1. Agencement de soupape (1) comprenant un boîtier de soupape (2), une broche (4) disposée dans le boîtier de soupape (2), la broche (4) étant disposée perpendiculairement à la direction d'écoulement, et un organe d'arrêt (3) pouvant être connecté de manière mobile à la broche (4), la broche (4) présentant un dispositif (5) pour limiter le couple, le dispositif (5) pour limiter le couple se composant d'une première région de cage (17) en liaison fonctionnelle avec la broche (4) et d'une deuxième région de plateau (18) en liaison fonctionnelle avec un dispositif d'actionnement (19), la région de cage (17) et la région de plateau (18) présentant des dentures ou des dentures conjuguées (20, 21) s'adaptant mutuellement, **caractérisé en ce que** la denture (21) de la région de cage (17) présente des flancs de dents (23, 24) avec des angles de flancs réalisés différemment (α, β), l'angle de flanc (α, β) variant en continu de (α, β) à (β, α) lors du déplacement axial de la région de cage (17) par rapport à la région de plateau (18).

2. Agencement de soupape (1) selon la revendication 1, **caractérisé en ce que** le boîtier de soupape (2) se compose d'une première région de boîtier inférieure (6) recevant l'organe d'arrêt (3) et parcourue par un fluide, et d'une deuxième région de boîtier supérieure (7) recevant le dispositif (5) pour limiter le couple.

3. Agencement de soupape (1) selon au moins l'une quelconque des revendications 1 ou 2, **caractérisé en ce que** la première région de boîtier inférieure (6) présente une section transversale en forme de T, les axes des conduites d'afflux et de sortie étant disposés dans une ligne.

4. Agencement de soupape (1) selon au moins l'une quelconque des revendications 1 à 3, **caractérisé en ce que** l'on dispose sur l'organe d'arrêt (3) un corps d'étanchéité (13) réalisé obliquement par rapport à la direction d'écoulement et coïncidant avec le biseau du siège de soupape (31).

5. Agencement de soupape (1) selon au moins l'une quelconque des revendications 1 à 4, **caractérisé en ce que** la région de cage (17) est disposée par rapport à la région de plateau (18) de manière à pouvoir tourner autour de l'axe de broche (S) et de manière déplaçable dans la direction de l'axe de broche (S).

6. Agencement de soupape (1) selon au moins l'une quelconque des revendications 1 à 5, **caractérisé en ce que** la denture (21) de la région de cage (17) est réalisée de manière radialement élastique.

7. Agencement de soupape (1) selon au moins l'une quelconque des revendications 1 à 6, **caractérisé en ce que** la denture (21) de la région de cage (17) présente une longueur (L) qui est plus longue que la hauteur (H) de la denture (20) de la région de plateau (18).

8. Agencement de soupape (1) selon au moins l'une quelconque des revendications 1 à 7, **caractérisé en ce que** la région de cage (17) et la région de plateau (18) sont réalisées en plastique.

9. Agencement de soupape (1) selon au moins l'une quelconque des revendications 1 à 8, **caractérisé en ce que** l'agencement de soupape est réalisé sous forme de soupape à mouvement linéaire (1).

10. Agencement de soupape (1) selon au moins l'une quelconque des revendications 1 à 8, **caractérisé en ce que** l'agencement de soupape est réalisé sous forme de robinet à boisseau sphérique.
